**Europäisches Patentamt**

(19) **European Patent Office**

**Office européen des brevets**

(11) Numéro de publication: **0 051 016**
**B1**

(12) # FASCICULE DE BREVET EUROPEEN

(45) Date de publication du fascicule du brevet:
14.08.85

(51) Int. Cl.⁴: **G 21 C 17/06**

(21) Numéro de dépôt: **81401627.5**

(22) Date de dépôt: **16.10.81**

(54) **Procédé et dispositif de détection d'éléments combustibles défectueux dans un assemblage combustible pour réacteur nucléaire.**

(30) Priorité: **24.10.80 FR 8022789**

(73) Titulaire: **Framatome, Tour Fiat 1 place de la Coupole, F-92400 Courbevoie (FR)**

(43) Date de publication de la demande:
**05.05.82 Bulletin 82/18**

(72) Inventeur: **Marini, Jean, Chemin du Bois Martin, F-78160 Marly le Roi (FR)**
Inventeur: **Gravelle, Alain, 39 rue Amédée Usseglio, F-92350 Le Plessis Robinson (FR)**

(45) Mention de la délivrance du brevet:
**14.08.85 Bulletin 85/33**

(74) Mandataire: **Fort, Jacques, CABINET PLASSERAUD 84, rue d'Amsterdam, F-75009 Paris (FR)**

(84) Etats contractants désignés:
**BE CH DE FR GB IT LI SE**

(56) Documents cités:
**DE - A - 2 528 422**
**FR - A - 2 287 753**
**US - A - 2 655 035**
**US - A - 4 009 616**

**PATENT ABSTRACTS OF JAPAN, vol. 1, no. 109, 24 septembre 1977, page 3291N77**

**Description**

L'invention concerne un procédé et un dispositif de détection d'éléments combustibles défectueux dans un assemblage combustible pour un réacteur nucléaire.

Les assemblages combustibles pour réacteur nucléaire, en particulier les assemblages combustibles pour réacteur à eau sous pression sont constitués par un faisceau d'éléments combustibles allongés appelés crayons combustibles, disposés parallèlement les uns aux autres dans la direction longitudinale de l'assemblage.

Ces crayons combustibles sont constitués par des tubes en matériau de gainage remplis par des pastilles combustibles.

Les différents crayons combustibles sont maintenus en place dans l'assemblage par des plaques entretoises et des plaques d'extrémité reliées à des tubes de soutien se substituant à certains crayons combustibles et permettant d'assurer la rigidité de l'assemblage.

En cours d'utilisation dans le cœur du réacteur nucléaire, ces assemblages peuvent se détériorer sous l'effet des différentes contraintes mécaniques ou thermiques ou encore sous l'effet de la corrosion, si bien que la matériau de gainage des crayons combustibles peut présenter des fissures par lesquelles des matériaux radio-actifs peuvent passer dans le fluide de refroidissement du réacteur.

Lors de opérations de rechargement du réacteur nucléaire, au cours desquelles les assemblages usagés situés dans une partie du cœur sont remplacés par des assemblages neufs, il est nécessaire de détecter les assemblages comportant des crayons combustibles présentant des fuites.

Pendant ces opérations, le cœur du réacteur est entièrement plongé dans un liquide de protection tel que l'eau et les assemblages participant aux opérations de rechargement sont transportés sous eau depuis la cuve du réacteur jusqu'à la piscine du combustible.

Il est nécessaire de détecter les assemblages présentant des fuites, que ces assemblages soient placés dans une zone du cœur dans laquelle on effectue le rechargement ou que ces assemblages soient placés dans une zone du cœur dans laquelle on maintient les assemblages en place.

En effet, il importe soit de remplacer ces assemblages présentant des fuites par des assemblages neufs, soit de remplacer les crayons défectueux à l'intérieur de l'assemblage par des crayons neufs.

Dans le cas où l'assemblage doit être remplacé de toute façon par un assemblage neuf, il importe néanmoins de savoir si l'assemblage usagé présente des fuites, puisque dans ce cas des précautions spéciales doivent être prises pour son transport ou son stockage.

Pour effectuer cette détection d'assemblage présentant des fuites, on a proposé l'utilisation de dispositifs appelés cellules de ressuage dans lesquelles on dispose les assemblages un par un successivement, à l'intérieur de la piscine du combustible. On provoque une élévation de température de l'assemblage, si bien que la pression des gaz de fission contenus dans les crayons combustibles augmente et que ces gaz s'échappent à l'intérieur de la cellule de ressuage par les fissures des crayons si ceux-ci sont défectueux.

Une mesure d'activité gamma dans le fluide remplissant la cellule de ressuage permet de déceler l'échappement de gaz de fission et donc la présence d'un assemblage défectueux.

Une telle cellule de ressuage a été décrite dans le brevet français de la Société FRAMATOME n° 2 389 202.

On connaît également un procédé de détection d'assemblages combustibles présentant des fuites en utilisant des phénomènes acoustiques sonores ou ultrasonores liés aux chocs de bulles de gaz de fission sur un écran ou à l'accumulation de ces gaz de fission sortant des crayons combustibles par les défauts de la gaine sous la surface de l'écran.

Pour la mise en œuvre de cette méthode, il faut provoquer la dilatation des gaz soit par chauffage soit par dépressurisation de l'assemblage. Ces deux méthodes de recherche des assemblages défectueux dont la mise en œuvre est simple et s'intègre parfaitement dans les opérations de transfert du combustible permettent de déterminer les assemblages défectueux au cours de ces opérations de transfert. Cependant, ces méthodes ne permettent pas de localiser exactement le crayon combustible présentant des fuites à l'intérieur de l'assemblage.

Il est évidemment nécessaire de repérer les crayons combustibles défectueux, lorsqu'on désire remplacer ces crayons dans l'assemblage par des crayons neufs avant de recharger l'assemblage dans le cœur du réacteur.

On a donc proposé des procédés permettant de repérer les crayons combustibles défectueux dans des assemblages pendant les opérations de rechargement du réacteur nucléaire. On a par exemple proposé dans le brevet français 2 222 732 de détecter la présence d'eau dans les crayons combustibles défectueux en chauffant par induction chacun des crayons de l'assemblage et en détectant les bulles de vapeur ou les condensations qui peuvent se produire au niveau du bouchon du crayon combustible à l'aide d'un contrôle ultrasonore par écho.

Ce procédé qui permet une localisation des crayons combustibles présentant des fuites nécessite cependant le démontage partiel de l'assemblage puisque chaque crayon doit être placé à l'intérieur d'un dispositif de chauffage par induction.

On a également proposé dans le brevet français 2 287 753, de provoquer la propagation d'un signal acoustique le long de la gaine de chacun des éléments combustibles et de capter le signal obtenu après propagation le long de la gaine de l'élément combustible. Dans le cas où un défaut est présent sur la gaine de l'élément combustible, on observe une atténuation du signal due à la présence de ce défaut.

Pour mettre en œuvre ce procédé, il est nécessaire de placer sur chaque crayon un émetteur et un récepteur ou un émetteur-récepteur d'ondes acoustiques et d'isoler la surface extérieure de la gaine du crayon combustible du liquide réfrigérant, en plaçant le crayon dans une ambiance gazeuse.

De plus, lorsque le défaut à détecter est éloigné de l'extrémité où se trouve le récepteur des ondes acoustiques, le signal de retour risque d'être noyé dans le bruit de fond acoustique.

On ne connaît donc pas de procédé permettant d'effectuer une détection extrêmement sûre de crayons combustibles défectueux dans un assemblage non démonté qui soit également d'une grande facilité de mise en œuvre.

Le but de l'invention est donc de proposer un procédé de détection d'éléments combustibles défectueux dans un assemblage combustible pour réacteur nucléaire constitué par un faisceau d'éléments combustibles allongés ou crayons disposés parallèlement les uns aux autres dans la direction longitudinale de l'assemblage, consistant à émettre des ondes ultrasonores depuis l'une des extrémités de chacun des crayons combustibles de l'assemblage successivement, ces ondes se propageant dans le crayon suivant toute sa longueur et à détecter les anomalies éventuelles dans la propagation des ondes ultrasonores, apparaissant lorsqu'au moins un défaut est présent dans le crayon, pour la détection de ce défaut, ce procédé de détection, d'une mise en œuvre extrêmement simple, permettant une détection sûre des crayons combustibles défectueux sans démontage de l'assemblage combustible.

Dans ce but, pour la mise en œuvre du procédé suivant l'invention:
– on maintient l'assemblage entièrement plongé dans un liquide de protection tel que l'eau,
– on déplace un capteur d'ultrasons au voisinage des crayons combustibles de l'assemblage et dans leur direction longitudinale, pendant la propagation des ondes dans chacun des crayons,
– on capte, au moyen de ce capteur, les ondes ultrasonores éventuellement diffusées dans le liquide de protection dans lequel baigne l'assemblage, par un défaut du crayon combustible dans lequel se propagent les ondes ultrasonores émises,
– on détermine les variations de l'amplitude du signal capté suivant la position du capteur dans la direction longitudinale du crayon dans lequel se propagent les ondes ultrasonores,
– et on détermine la position du capteur pour laquelle l'amplitude du signal capté est maximum, correspondant à la position du défaut suivant la longueur du crayon.

Afin de bien faire comprendre l'invention, on va maintenant décrire à titre d'exemple non limitatif, en se référant aux figures jointes en annexe, un exemple de mise en œuvre du procédé suivant l'invention, dans le cas du contrôle d'assemblages combustibles d'un réacteur nucléaire à eau sous pression dans la piscine du réacteur ou dans la piscine du combustible, avec localisation du défaut sur le crayon combustible.

La figure 1 représente de manière schématique, l'appareillage utilisé pour la mesure sur un crayon combustible.

La figure 2 représente le signal ultrasonore capté par l'appareillage de contrôle.

La figure 3 représente les variations de l'amplitude maximale du signal en fonction de la position du capteur suivant la longueur des crayons combustibles.

La figure 4 représente l'appareillage utilisé pour le contrôle d'un assemblage complet.

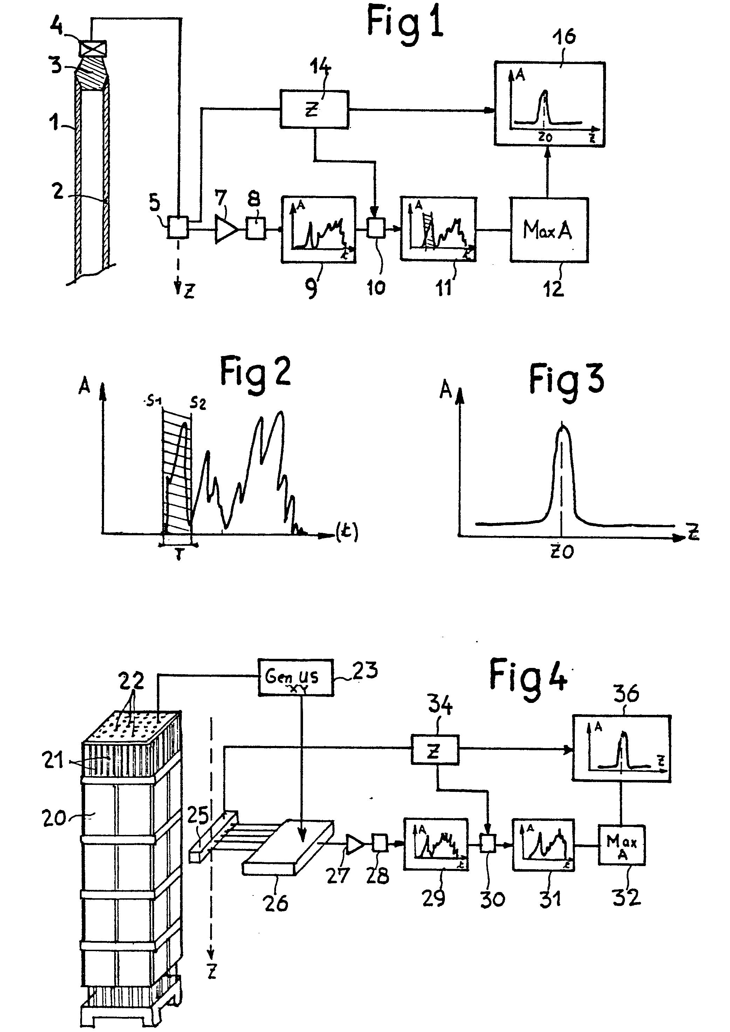

Sur la figure 1, on voit un crayon combustible 1 dont la gaine présente une fissure 2.

L'extrémité supérieure du crayon est fermée par un bouchon 3 au contact duquel on a disposé un générateur d'ultrasons 4 qui produit des ondes ultrasonores se propageant dans tout le crayon combustible depuis son extrémité représentée sur la figure 1 jusqu'à son extrémité opposée.

Le crayon combustible 1 est entièrement plongé dans l'eau remplissant la piscine du combustible.

Un capteur d'ultrasons 5 est disposé au voisinage de la surface latérale du crayon 1, relié à un dispositif de déplacement vertical permettant de lui faire occuper toutes les positions suivant la longueur des crayons.

On désignera par Z l'axe de déplacement du capteur 5 qui correspond dans le cas du dispositif représenté à la figure 1, à la direction verticale.

Une liaison entre le générateur d'ultrasons 4 et le capteur 5 permet de déterminer le temps d'émission d'une onde ultrasonore comme origine des temps pour le capteur 5.

On a représenté à la figure 2 le signal capté par le capteur 5 dans le cas de l'émission d'une onde ultra-sonore par le générateur 4.

Ce signal S peut se décomposer en deux signaux S1 et S2.

Le signal S1 correspond aux ondes ultra-sonores diffusées au niveau du défaut 2 dans l'eau entourant le crayon alors que le signal S2 correspond aux signaux parasites qui arrivent sur le capteur 5 après le signal S1. En effet, lors de la propagation de l'onde ultra-sonore dans la gaine du crayon combustible 1, une partie de l'énergie liée à ces ondes est transmise à l'eau entourant la gaine où elle se propage sous forme d'ondes de compression à une vitesse inférieure à la vitesse de propagation de l'onde dans le métal de la gaine.

Les ondes se réfléchissent sur les structures environnant le crayon combustible 1 et parviennent finalement au capteur 5, ce qui se traduit par un signal parasite S2.

Le signal principale S1 résulte des ondes se propageant dans la gaine du crayon jusqu'à la fissure 2 où elles sont diffusées dans l'eau baignant le crayon, avant de parvenir au capteur 5.

Ces ondes diffusées qui ont un parcours dans l'eau plus court que les ondes réfléchies par les éléments environnant le crayon 1 parviennent au capteur 5 avant les ondes réfléchies.

Sur le signal enregistré par le capteur 5, la partie S1 du signal précède donc la partie S2 correspondant aux signaux parasites.

Par le calcul ou par mesure sur un crayon isolé, on arrive à connaître la forme du signal diffusé au niveau du défaut S1, si bien qu'on peut isoler une fenêtre telle que représenté sur la partie hachurée de la figure 2, correspondant à la partie diffusée dans l'eau au niveau du défaut, du signal ultrasonore.

Au cours des déplacements des capteurs 5 dans la direction Z, le signal S1 se décale dans le temps, puisque le parcours dans l'eau des ondes diffusées varie avec la position Z du capteur 5.

Une mesure précise de la position Z du capteur 5 permet une détermination de la position de la fenêtre correspondant au signal S1 dans le signal mesuré.

On effectue alors une mesure de l'amplitude maximum du signal S1 et l'on détermine les variations de cette amplitude maximum en fonction de la position Z du capteur 5 suivant la hauteur du crayon.

On a représenté à la figure 3 la variation de cette amplitude maximum en fonction de la position du capteur.

Il est bien évident, que dans le cas où un défaut est présent dans la gaine du crayon, c'est-à-dire dans le cas où le signal diffusé S1 existe, la courbe représentant les variations A (Z) présente un maximum pour la valeur $Z = ZO$ correspondant à la position du capteur à la hauteur exacte du défaut 2.

En conséquence, le dispositif de mesure et de contrôle relié au capteur 5, ainsi qu'il est visible sur la figure 1, comprend un préamplificateur 7, un filtre 8, un dispositif 9 d'enregistrement ou de visualisation du signal A (t), après amplification et filtrage, un filtre 10 associé à un module 11 d'enregistrement ou de visualisation de la fenêtre S1 du signal filtré par le filtre 10, et un module 12 de détermination du maximum de l'amplitude A du signal S1.

Le dispositif comporte également un module 14 de mesure et d'enregistrement du paramètre Z déterminant la position du capteur 5 sur la hauteur des crayons, un signal correspondant à cette valeur de Z étant transmis au filtre 10 pour la détermination de la fenêtre correspondant au signal S1 en fonction de la position du capteur.

Enfin le dispositif comporte un module 16 pour l'enregistrement et/ou la visualisation du signal A (Z) et la détermination du maximum de la courbe A (Z).

Le module 16 reçoit d'une part un signal représentant la valeur instantanée de Z et d'autre part la valeur du maximum A du signal S1 correspondant à cette valeur de Z. Les deux valeurs sont enregistrées et permettent l'enregistrement et/ou la visualisation de la courbe A (Z).

La détermination du maximum de cette courbe lorsque le capteur 5 est déplacé le long du crayon sur toute sa longueur permet la détermination de la valeur ZO correspondant à ce maximum.

Le dispositif permet donc, d'une part de déterminer la présence d'un défaut dans le crayon 1 en cours d'examen et d'autre part de déterminer la position précise de ce défaut sur le crayon.

En effet, la présence ou l'absence d'un signal diffusé S1 dans le signal capté par le capteur 5 permet la détermination d'un crayon défectueux ou d'un crayon non défectueux, respectivement.

La précision du tracé de la courbe A (Z) dépend de la largeur de la fenêtre correspondant au signal S1 dans le signal capté par le capteur 5.

On peut utiliser indifféremment pour constituer les différents modules 9, 11 et 16, des modules de calcul ou des dispositifs de visualisation permettant une détermination et une localisation du défaut soit par déclenchement d'un signal assorti d'une valeur numérique, soit par l'examen d'une courbe dont on détermine le maximum.

Dans le cas d'un crayon non défectueux, le signal enregistré et éventuellement visualisé par le module 9 est caractéristique des signaux parasites ne comportant qu'une partie S2. Le signal est facilement reconnaissable si un étalonnage préalable a été fait sur un crayon non défectueux de façon certaine, par exemple un crayon neuf, placé dans un environnement comparable.

Dans le cas où l'on veut examiner un assemblage, après avoir démonté une plaque d'extrémité permettant d'accéder à l'extrémité de chacun des crayons combustibles de cet assemblage, on peut utiliser soit un capteur unique qu'on déplace successivement et automatiquement d'un crayon à l'autre, soit un ensemble d'émetteurs ultra-sonores disposés suivant un réseau correspondant au réseau des sections transversales des crayons dans l'assemblage.

On a représenté sur la figure 4, de façon schématique, un tel dispositif utilisé pour le contrôle d'un assemblage 20 constitué d'un ensemble de crayons 21 disposés suivant un réseau à mailles carrées dans un plan transversal. Un ensemble émetteur d'ultrasons 22 est disposé sur une plaque ayant approximativement les dimensions de la plaque d'extrémité de l'assemblage venant se placer au-dessus de celui-ci de façon que chacun des émetteurs 22 soit au-dessus d'un crayon 21 et en contact avec son bouchon supérieur.

Un générateur d'ultrasons 23 est relié à chacun des émetteurs 22 et associé à un dispositif électronique d'adressage permettant d'exciter successivement chacun des émetteurs, c'est-à-dire d'envoyer successivement des ondes ultra-sonores dans chacun des crayons 21 constituant l'assemblage.

Pour chacun des crayons de l'assemblage, un adressage en X Y dans un plan transversal par rapport à l'assemblage permet un repérage du crayon combustible dans lequel se propagent les ultrasons.

L'adresse de l'émetteur et du crayon combustible correspondant est transmise à un module 26 qui reçoit également le signal transmis par un capteur 25 mobile dans la direction Z de l'assemblage, à une distance fixe de la paroi latérale de celui-ci.

Le contrôle de l'assemblage 20 est effectué alors que l'assemblage est entièrement plongé dans l'eau de la piscine du combustible et le capteur 25 est constitué par une barrette de capteurs unitaires dont la longueur totale est au moins égale au côté du carré constituant la section transversale de l'assemblage. De cette manière, la valeur du signal reçu est augmentée car, lorsqu'on travaille sur un crayon disposé à l'intérieur de l'assemblage, l'onde diffusée dans l'eau se réfléchit sur les composants adjacents au crayon, de sorte que le faisceau émis à l'extérieur de l'assemblage présente une largeur supérieure à celle d'un capteur unitaire, généralement de l'ordre du côté de la section transversale d'assemblage.

Le dispositif de mesure et de contrôle associé au capteur 25 et au module 26 est par ailleurs semblable à celui qui a été décrit pour un crayon combustible unique et représenté à la figure 1.

Ce dispositif comporte un préamplificateur 27, un filtre 28, un module 29 pour l'enregistrement et la visualisation du signal A (t), un filtre 30 recevant un signal représentant la mesure de Z et permettant la détermination du signal S1 et son enregistrement et/ou sa visualisation dans le module 31 et un module 32 de calcul du maximum de l'amplitude A du signal A (t).

Ce dispositif comprend par ailleurs un module 34 pour la mesure précise et l'élaboration d'un signal correspondant à la valeur de Z définissant la position du capteur 25 dans la hauteur de l'assemblage et un module 36 pour l'enregistrement et la visualisation de la courbe A (Z) et pour la détermination du maximum de cette courbe correspondant à la valeur de $Z_o$ définissant la position d'un défaut éventuel dans le crayon en cours d'examen défini par ses coordonnées X, Y.

Pour augmenter encore la sensibilité du dispositif on peut utiliser à la place d'une barrette unique disposée à proximité d'une des faces de l'assemblage, un ensemble de quatre barrettes entourant entièrement cet assemblage.

Le fonctionnement du dispositif représenté à la figure 4 est sensiblement identique au fonctionnement du dispositif représenté à la figure 1, à ceci près qu'il permet l'identification du ou des crayons défectueux dans un assemblage par leurs coordonnées X, Y. En effet on pourra repérer les coordonnées X, Y au niveau du module 26, à chaque fois qu'un signal ultrasonore diffusé par un défaut (signal S1) a été identifié sur la courbe A (t).

Dans le cas où aucun signal diffusé n'est repéré pour l'ensemble de l'assemblage cet assemblage peut être considéré comme non défectueux.

On voit qu'un des avantages importants du dispositif suivant l'invention est de permettre un repérage des crayons défectueux, avec une sensibilité meilleure que dans les techniques antérieures, puisque le signal capté sur lequel on effectue la discrimination n'est pas noyé dans le bruit de fond du signal engendré dans le crayon, un décalage temporel existant entre le signal diffusé par le dèfaut et le bruit de fond.

Par ailleurs, l'examen peut se faire alors que l'assemblage est plongé dans un liquide de protection, comme c'est toujours le cas pour les assemblages irradiés en cours de stockage ou de transport.

Par ailleurs, le procédé de détection ne suppose pas un chauffage du crayon ou de l'assemblage combustible ou une autre modification des conditions physiques du milieu baignant l'assemblage pour être mis en œuvre.

Le procédé suivant l'invention a d'autre part l'avantage de permettre un examen de tous les crayons, même de ceux qui ne sont pas en périphérie de l'assemblage, puisque pour ces crayons disposés à l'intérieur de l'assemblage, l'énergie diffusée par le défaut éventuel va jusqu'au capteur après réflexion sur les éléments adjacents à cet élément disposé à l'intérieur de cet assemblage.

D'autre part, le procédé suivant l'invention permet un examen des crayons sur toute leur longueur et même dans leur partie cachée par les grilles entretoises car la présence des grilles se traduit simplement par une atténuation du signal capté que l'on peut compenser en agissant sur l'amplitude du signal émis. Par ailleurs, le procédé suivant l'invention peut être mis en œuvre sur un assemblage non démonté en utilisant l'espace libre entre les bouchons des crayons et la plaque supérieure, pour placer les capteurs.

Mais l'invention ne se limite pas au mode de réalisation qui a été décrit; elle en comprend au contraire toutes les variantes.

Dans le cas d'un contrôle effectué sur un assemblage complet, on peut utiliser à la place d'une barrette de capteurs d'une longueur correspondant à la longueur du côté de l'assemblage, un capteur unique qu'on déplace parallèlement au côté de la section de l'assemblage de façon à augmenter l'amplitude de la zone surveillée.

Dans ce cas, le capteur est déplacé à la fois parallèlement à l'axe de l'assemblage et dans une direction perpendiculaire à cet axe.

On peut également utiliser un capteur que l'on déplace à l'intérieur des tubes-guides constituant l'ossature de l'assemblage à la place d'un capteur mobile à l'extérieur de l'assemblage.

Enfin, on peut imaginer des modes de discrimination du signal diffusé dans l'eau baignant le crayon ou l'assemblage combustible différents de ceux qui ont été décrits.

Le procédé et le dispositif suivant l'invention s'applique à la détection et à la localisation de défauts sur des assemblages combustibles quelconques constitués de crayons combustibles comportant une gaine à l'intérieur de laquelle est enfermé le combustible nucléaire et susceptible de comporter des défauts tels que des fissures.

**Revendications**

1. Procédé de détection d'éléments combustibles défectueux dans un assemblage combustible (20) pour réacteur nucléaire constitué par un faisceau d'éléments combustibles allongés (21) ou crayons, disposés parallèlement les uns aux autres dans la direction longitudinale de l'assemblage (20), consistant à émettre des ondes ultrasonores depuis l'une des extrémités de chacun des crayons combustibles (21) de l'assemblage successivement, ces ondes se propageant dans le crayon (21) suivant toute sa longueur et à détecter les anomalies éventuelles dans la propagation des ondes ultrasonores, apparaissant lorsqu'au moins un défaut est présent dans le crayon, pour la détection de ce défaut, caractérisé par le fait:

– qu'on maintient l'assemblage (20) entièrement plongé dans un liquide de protection tel que l'eau,

– qu'on déplace un capteur d'ultrasons (25) au voisinage des crayons combustibles (21) de l'assemblage (20) et dans leur direction longitudinale, pendant la propagation des ondes dans chacun des crayons (21),

– qu'on capte, au moyen de ce capteur (25), les ondes ultrasonores éventuellement diffusées dans le liquide de protection dans lequel baigne l'assemblage (20) par un défaut du crayon combustible (21) dans lequel se propagent les ondes ultrasonores émises,

– qu'on détermine les variations de l'amplitude du signal capté suivant la position du capteur (25) dans la direction longitudinale du crayon (21) dans lequel se propagent les ondes ultrasonores,

– et qu'on détermine la position du capteur (25) pour laquelle l'amplitude du signal capté est maximum, correspondant à la position du défaut suivant la longueur du crayon (21).

2. Procédé de détection suivant la revendication 1, caractérisé par le fait qu'on déplace le capteur d'ultrasons (25) à l'extérieur de l'assemblage (20).

3. Procédé de détection suivant la revendication 1, caractérisé par le fait qu'on déplace le capteur d'ultrasons (25) à l'intérieur de l'assemblage (21), dans un tube-guide de celui-ci.

4. Procédé de détection suivant l'une quelconque des revendications 1, 2 et 3, caractérisé par le fait qu'on opère une discrimination entre le signal correspondant aux ondes diffusées dans le liquide par rapport aux ondes parasites, par une filtration du signal, en tenant compte de l'influence de la position du capteur sur le décalage dans le temps entre le signal correspondant aux ondes diffusées et les signaux parasites.

5. Procédé de détection suivant la revendication 1, 2 et 3, caractérisé par le fait que pour chacune des positions du capteur (25) suivant la direction longitudinale des assemblages, on détermine l'amplitude maximale du signal correspondant aux ondes diffusées et qu'on enregistre les variations de ces valeurs maximales du signal des ondes diffusées en fonction d'un paramètre déterminant la position du capteur (25) dans la direction longitudinale de l'assemblage (20).

6. Dispositif de détection d'éléments combustibles défectueux dans un assemblage pour la mise en œuvre d'un procédé selon l'une quelconque des revendications 1, 2, 3, 4 et 5 comportant au moins un émetteur d'ultrasons (22) relié à un générateur (23) permettant d'envoyer successivement des ondes ultrasonores dans chacun des crayons (21) d'un assemblage (20) par l'une de leurs extrémités et de déterminer le crayon (21) soumis à ces ondes ultrasonores, caractérisé par le fait qu'il comporte en outre:

– un capteur d'ultrasons (25) associé à un dispositif de déplacement dans la direction longitudinale de l'assemblage,

– et un ensemble de contrôle et de mesure constitué par:

– un module (31) de discrimination et de repérage d'un signal correspondant à des ondes diffusées dans un liquide baignant l'assemblage,

– un dispositif (34) de mesure de la position du capteur (25), suivant la longueur de l'assemblage,

– un module (32) de mesure de l'amplitude maximale du signal correspondant aux ondes détectées par le capteur (25),

– et un module (36) de détermination des variations de cette valeur maximale en fonction de la position du capteur (25) suivant la direction longitudinale de l'assemblage et de détermination de la position du capteur (25) correspondant au maximum de la courbe représentant ces variations, cette position correspondant à la position d'un défaut suivant la direction longitudinale de l'assemblage (20).

7. Dispositif suivant la revendication 6, caractérisé par le fait que le capteur (25) est mobile dans une direction perpendiculaire à la direction longitudinale de l'assemblage (20).

8. Dispositif suivant la revendication 6, caractérisé par le fait que le capteur (25) est constitué par des éléments de détection unitaires assemblés suivant un ensemble constituant une barrette dirigée suivant une direction perpendiculaire à la direction longitudinale de l'assemblage (20) et d'une longueur voisine de la longueur de la section transversale de l'assemblage (20).

**Claims**

1. Method of detecting defective fuel elements in a nuclear reactor fuel assembly (20) constituted by a bundle of elongated fuel elements (21) or rods, located parallel to each other in the longitudinal direction of the assembly (20) consisting in transmitting ultrasonic waves from one of the ends of each of the fuel elements (21) of the assembly in succession, said waves propagating within the element (21) throughout its length and in detecting possible anomalies in the propagation of ultrasonic waves, which appear when at least one defect is present in the element, for detecting that defect, characterized in that:

the assembly (20) is kept entirely immersed in a protective liquid such as water,

an ultrasonic sensor (25) is moved in the vicinity of the fuel elements (21) of the assembly (20) and in the longitudinal direction thereof, during propagation of the waves in each of the elements (21),

the sensor (25) is used for detecting the ultrasonic waves possibly scattered, within the protection liquid in which the assembly (20) is immersed, by a defect of the fuel element (21) along which the transmitted ultrasonic waves are propagating,

the variations of the amplitude of the detected signal in response to the location of the sensor (25) in the longitudinal direction of the element (21) in which the ultrasonic wave propagate are determined,

and the location of the sensor (25) for which the amplitude of the detected signal is at a maximum, corresponding to the location of the defect in the longitudinal direction of the element (21), is determined.

2. Detection method according to claim 1, characterized in that the ultrasonic sensor (25) is moved outside the assembly (20).

3. Detection method according to claim 1, characterized in that the ultrasonic sensor (25) is moved inside the assembly in a guide tube thereof.

4. Detection method according to any one of claims 1, 2 and 3, characterized in that discrimination is made between the signal corresponding to the waves scattered within the liquid and the parasitic waves, by filtering the signal, taking into account the influence of the location of the sensor on the time gap between the signal corresponding to the scattered waves and the parasitic signals.

5. Detection method according to claim 1, 2 and 3, characterized in that, for each of the locations of the sensor (25) in the longitudinal direction of the assemblies, the maximum amplitude of the signal corresponding to the scattered waves is determined and the variations in said maximum values of the signal due to the scattered waves in response to a parameter determining the location of the sensor (25) in the longitudinal direction of the assembly (20) is recorded.

6. Apparatus for detecting defective fuel elements in an assembly, for carrying out a process according to any one of claims 1, 2, 3, 4 and 5, comprising at least one ultrasonic transmitter (22) connected to a generator (23) for successively sending ultrasonic waves into each of the elements (21) of an assembly (20) through one of the ends thereof and for determining the element (21) subjected to said ultrasonic waves, characterized in that it further comprises:

– a ultrasonic sensor (25) associated to a device for moving it along the longitudinal direction of the assembly,
– and a monitoring and measuring assembly consisting of:
  – a unit (31) for discriminating and identifying a signal corresponding to waves scattered into a liquid in which the assembly is immersed,
  – a device (34) for measuring the location of the sensor (25) along the assembly,
  – a unit (32) for measuring the maximum amplitude of the signal corresponding to the waves detected by the sensor (25),

– and a unit (36) for determining variations in said maximum value in response to the location of the sensor (25) in the longitudinal direction of the assembly and for determining the location of the sensor (25) corresponding to the maximum of the curve representing said variations, said location corresponding to the location of a defect in the longitudinal direction of the assembly (20).

7. Apparatus according to claim 6, characterized in that the sensor (25) is movable in a direction perpendicular to the longitudinal direction of the assembly (20).

8. Apparatus according to claim 6, characterized in that the sensor (25) is constituted by elementary detection elements assembled in a group constituting a bar arraged in a direction perpendicular to the longitudinal direction of the assembly (20) and with a length approaching the length of the transverse cross-section of the assembly (20).

**Patentansprüche**

1. Verfahren zum Lokalisieren defekter Brennelemente in einer Brennelementkassette (20) eines Kernreaktors, die aus einem Bündel langgestreckter, in Längsrichtung der Brennelementkassette parallel zueinander angeordneter Brennelemente oder -stäbe (21) besteht, das darin besteht, nacheinander von einem Ende eines jeden Brennstabs (21) der Brennelementkassette aus Ultraschallwellen auszusenden, die sich im Brennstab (21) über dessen gesamte Länge ausbreiten und die gegebenenfalls vorhandenen Anomalitäten in der Ausbreitung der Ultraschallwellen, die auftreten, wenn der Brennstab mit mindestens einem Defekt behaftet ist, zu messen, um den Defekt zu lokalisieren, dadurch gekennzeichnet, dass
– man die Brennelementkassette (20) vollständig in eine Schutzflüssigkeit, wie z.B. Wasser, eingetaucht lässt,
– eine Ultraschallsonde (25) in der Nähe der Brennstäbe (21) der Brennelementkassette (20) und an diesen entlang bewegt wird, während sich die Ultraschallwellen in jedem der Brennstäbe (21) ausbreiten,
– mit dieser Sonde (25) von einem in einem Brennstab (21), in dem sich die emittierten Ultraschallwellen ausbreiten, gegebenenfalls vorhandenen Defekt aus in die Schutzflüssigkeit, in der die Brennelementkassette eintaucht, abgestrahlte Ultraschallwellen erfasst werden,
– die Änderungen der Amplitude des erfassten Signals je nach Position der Sonde (25) in Längsrichtung des Brennstabs (21), in dem sich die Ultraschallwellen ausbreiten, bestimmt werden und
– die Position der Sonde (25) bestimmt wird, bei der die Amplitude des erfassten Signals maximal ist, wobei diese Position der Lage des Defekts in Längsrichtung des Brennstabs (21) entspricht.

2. Verfahren nach Anspruch 1, dadurch gekennzeichnet, dass die Ultraschallsonde (25) ausserhalb der Brennstoffkassette (20) bewegt wird.

3. Verfahren nach Anspruch 1, dadurch gekennzeichnet, dass die Ultraschallsonde (25) im Inneren der Brennelementkassette (21) in einem ihrer Führungsrohre bewegt wird.

4. Verfahren nach einem der Ansprüche 1 bis 3, dadurch gekennzeichnet, dass parasitären Wellen entsprechende Signale gegenüber Signalen, die den in die Flüssigkeit diffundierten Wellen entsprechen, diskriminiert werden, indem der Einfluss der Position der Sonde auf die Zeitverschiebung zwischen dem den diffundierten Wellen entsprechenden Signalen und den parasitären Signalen berücksichtigt wird.

5. Verfahren nach einem der Ansprüche 1 bis 3, dadurch gekennzeichnet, dass für jede Position der Sonde (25) längs der Brennelementkassette die maximale Amplitude des den diffundierten Wellen entsprechenden Signals bestimmt wird und die Änderungen dieser maximalen Werte des Signals der diffundierten Wellen in Abhängigkeit von einem Parameter, der die Position der Sonde (25) in Längsrichtung der Brennelementkassette (20) bestimmt, registriert werden.

6. Vorrichtung zum Lokalisieren defekter Brennelemente in einer Brennelementkassette, gemäss dem Verfahren nach einem der Ansprüche 1 bis 5 mit mindestens einem an einen Generator (23) angeschlossenen Ultraschallsender (22), mit dem nacheinander Ultraschall in jeden der Brennstäbe (21) einer Brennelementkassette (20) über eines seiner Enden eingekoppelt wird und der mit Ultraschall beaufschlagte Brennstab (21) bestimmt wird, gekennzeichnet durch

– eine Ultraschallsonde (25), die an einer Vorrichtung zum Verschieben in Längsrichtung der Brennelementkassette angeordnet ist und

– einer Steuer- und Messeinrichtung, bestehend aus
  – einem Modul (31) zur Ortsbestimmung eines in die Flüssigkeit, in der die Brennelementkassette eintaucht, diffundierten Wellen entsprechenden Signals und zum Diskriminieren von Signalen,
  – einer Vorrichtung (34) zum Bestimmen der Position der Sonde (25) längs der Brennelementkassette,
  – einem Modul (32) zum Messen der maximalen Amplitude des den von der Sonde (25) erfassten Wellen entsprechenden Signals und
  – einem Modul (36) zum Bestimmen der Änderungen dieses maximalen Werts in Abhängigkeit von der Position der Sonde (25) in Längsrichtung der Brennelementkassette und zum Bestimmen der Position der Sonde (25), die dem Maximum der dieser Änderung wiedergebenden Kurve entspricht, wobei diese Position der Lage eines Defekts in Längsrichtung der Brennelementkassette (20) entspricht.

7. Vorrichtung nach Anspruch 6, dadurch gekennzeichnet, dass die Sonde (25) in einer zur Längsrichtung der Brennelementkassette (20) senkrechten Richtung beweglich ist.

8. Vorrichtung nach Anspruch 6, dadurch gekennzeichnet, dass die Sonde (25) aus einzelnen Sondenelementen besteht, die zu einem Bügel zusammengefasst angeordnet sind, wobei der Bügel in einer Richtung senkrecht zur Längsrichtung der Brennelementkassette (20) angeordnet ist und eine Länge aufweist, die etwa der Breite der Querschnittsfläche der Brennelementkassette (20) entspricht.

# Fig 1

# Fig 2

# Fig 3

# Fig 4